# EUROPÄISCHE PATENTSCHRIFT

(11) **EP 1 588 920 B1**
(45) Veröffentlichungstag und Bekanntmachung des Hinweises auf die Patenterteilung: **14.11.2007**
(21) Anmeldenummer: 05090115.6
(22) Anmeldetag: 20.04.2005
(51) Int. Cl.: B62D 1/11, B62D 1/04

(54) **Energie absorbierendes Lenkrad**
Energy absorbing steering wheel
Volant absorbant l'énergie

(30) Priorität: 21.04.2004 DE 202004006494 U
(43) Veröffentlichungstag der Anmeldung: 26.10.2005
(73) Patentinhaber: Takata-Petri AG, 63743 Aschaffenburg (DE)
(72) Erfinder: Becker, Richard, 63762 Grossostheim (DE); Müller, Norbert, 63743 Aschaffenburg (DE)
(74) Vertreter: Baumgärtel, Gunnar

(56) Entgegenhaltungen:
- DE-A1- 2 714 959
- DE-A1- 3 921 333
- GB-A- 2 005 614
- US-A- 3 800 620
- US-A- 5 957 489
- PATENT ABSTRACTS OF JAPAN Bd. 017, Nr. 370 (M-1444), 13. Juli 1993 (1993-07-13) & JP 05 058307 A (NISSAN MOTOR CO LTD), 9. März 1993 (1993-03-09)

## Beschreibung

Die Erfindung betrifft ein Energie absorbierendes Lenkrad nach dem Oberbegriff des Anspruchs 1.

Großvolumige Lenkräder, wie sie z. B. für Lastkraftwagen benutzt werden, weisen in der Regel keine Airbagmodule auf. So ist aus der DE 30 48 771 C2 ein Energie absorbierendes Lenkrad bekannt, bei dem der Lenkradkranz, die Speichen und ein sich zwischen den Speichen und der Lenkradnabe erstreckender dünnwandiger Pralltopf einstückig aus Nylon hergestellt sind. Dabei erstrecken sich die Speichen vom Lenkradkranz aus zum oberen Rand des Pralltopfes, der mittig am Lenkrad angeordnet ist und oben mit einer Prallplatte abgedeckt ist. Beim Aufprall des Fahrers auf das Lenkrad verformt sich zunächst die Prallplatte und anschließend der Pralltopf.

Aus der Praxis sind weiterhin Lenkräder bekannt, bei denen sich die Speichen und damit auch die Speichenverkleidung vom Lenkradkranz zur Lenkradnabe hin erstrecken. Bei diesen Lenkrädern sind als Füllstück und zur Energieabsorption Einlagen aus Energie absorbierenden Kunststoffen angeordnet. Dabei bestehen diese Einlagen aus einem anderen Material als die Lenkradumhüllung. Die Herstellung eines Lenkrades unter Verwendung unterschiedlicher Kunststoffe ist aufwendig und entsprechend teuer.

In der GB 2 005 614 A wird ein Lenkrad für ein Kraftfahrzeug beschrieben, bei dem die Energieabsorption durch einen Hohlkörper, der sich innerhalb einer Ummantelung befindet, unterstützt wird. Der Hohlkörper besteht aus einem unter Belastung bruchfrei zusammenbrechenden Material, beispielsweise aus geblasenem Polyäthylen, aus geblasenem Acryl-Butadien-Styrol, aus streckmetellartig ausgebildetem Gittermaterial oder aus einem mit einer Wabenwaffelung versehenen Metallfolienmaterial.

Der Erfindung liegt deshalb die Aufgabe zugrunde, ein Energie absorbierendes Lenkrad so aufzubauen, dass es mit geringerem Aufwand und damit mit geringeren Kosten herstellbar ist.

Erfindungsgemäß wird dass gemäß den Merkmalen des Anspruchs 1 erreicht.

Bei einem Energie absorbierenden Lenkrad, insbesondere großvolumigen Lenkrad für LKW, mit einem Lenkradskelett mit Nabe, Speichen und Lenkradkranz, die mit einer Ummantelung versehen sind, wobei sich die Skelettabschnitte der Speichen vom Lenkradkranz bis zur Nabe erstrecken und wobei der Bereich oberhalb der Nabe energieabsorbierend ausgebildet ist, und wobei die Ummantelung zumindest im Bereich oberhalb der Nabe mindestens einen Hohlraum zur Unterstützung der Energieabsorption aufweist, ist erfindungsgemäß der Hohlraum durch die Ummantelung, einen Teil des Speichenskeletts und die Nabe begrenzt und die Energieabsorption wird nur durch die Ummantelung und die im Hohlraum befindliche, komprimierbare Luft erzielt, ohne dass sich in dem Hohlraum Einlagen befinden.

Bei diesem erfindungsgemäßen Lenkrad wird bewusst auf Kunststoffeinlagen aus einer anderen Kunststoffart zur Energieabsorption verzichtet. Eine Energieabsorption wird durch den Hohlraum in Verbindung mit der Lenkradummantelung erzielt.

Durch die unterschiedliche Gestaltung des Hohlraumes kann die Größe der Energieabsorption beeinflusst werden. Vorzugsweise erstreckt sich ein Hohlraum von der Nabe bis in den oberen, dem Insassen zugekehrten Bereich der Ummantelung.

Es ist zweckmäßig, dass die Ummantelung oberhalb des Hohlraumes eine Dicke aufweist, die eine Verformung beim Aufprall des Insassen zulässt ohne dabei zu brechen. Eine Ummantelung aus PUR-Schaum weist in einer Ausführungsform oberhalb des Hohlraumes eine Dicke von 10 bis 20.mm auf.

Es ist weiterhin zweckmäßig, dass sich der Hohlraum seitlich bis in den Bereich der Speichen erstreckt. Im Bereich einer auf der Lenkradummantelung aufgebrachten Plakette kann der Hohlraum eine Öffnung aufweisen, die durch die Plakette verschlossen ist.

Die Energieabsorption kann bei der erfindungsgemäßen Anordnung durch weitere Veränderungen in einfacher Weise unterschiedlichen Anforderungen angepasst werden. Durch die Veränderung der Wanddicke lässt sich die Energieabsorption verändern.

Die Erfindung soll in einem Ausführungsbeispiel anhand von Zeichnungen erläutert werden. Es zeigen:
- Fig. 1: eine Draufsicht auf ein Lenkrad, wobei nur die linke Seite des Lenkrades dargestellt ist;
- Fig. 2: eine Ausführungsform gemäß dem Schnitt A - A durch das Lenkrad der Fig. 1;

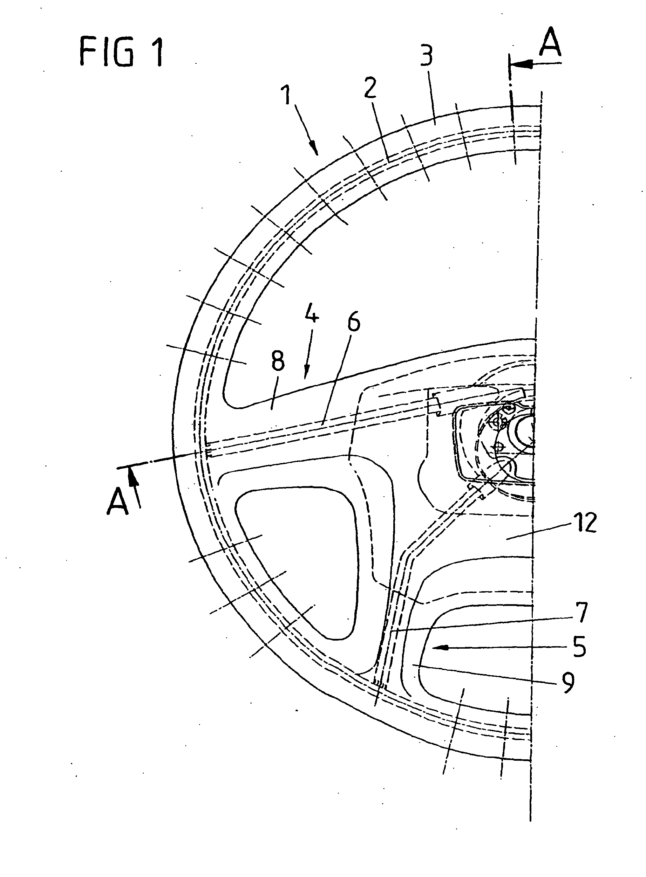

Die Fig. 1 zeigt ein Lenkrad in der Draufsicht, wobei das Lenkrad nur zur Hälfte dargestellt ist. Die rechte nicht dargestellte Hälfte entspricht spiegelbildlich der dargestellten linken Hälfte. Das Lenkrad weist einen Lenkradkranz 1 auf, der aus einem gestrichelt dargestellten Lenkradkranzskelett 2 und einer Lenkradkranzummantelung 3 besteht. Weiterhin weist das Lenkrad vier Speichen auf, von denen nur zwei -Speichen 4, 5 dargestellt sind. Die Speichen bestehen aus einem Speichenskelett 6 bzw. 7 und einer Speichenummantelung 8 bzw. 9.

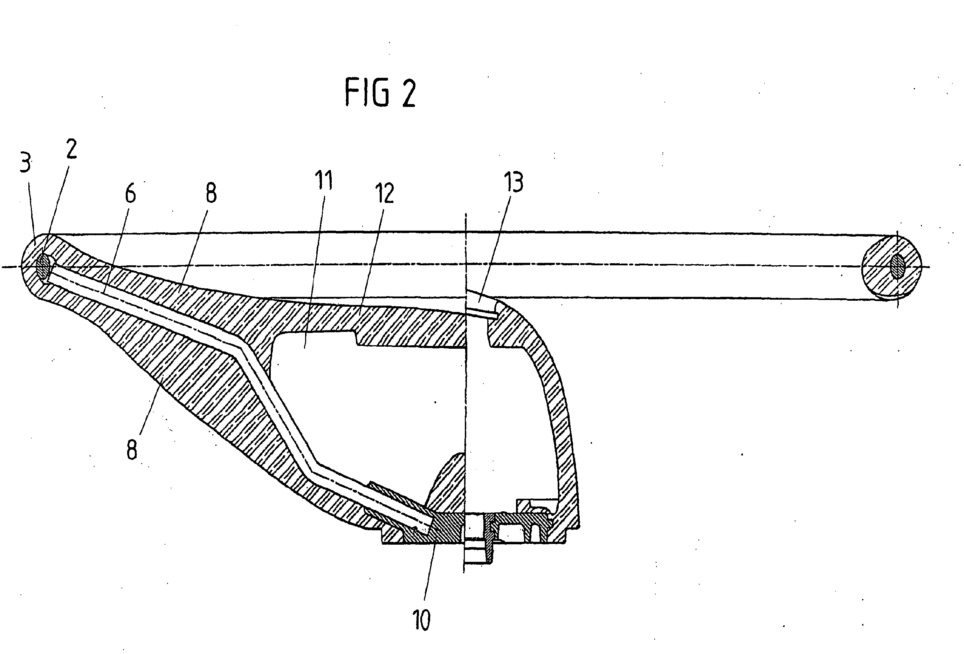

Im Schnitt der Fig. 2 ist erkennbar, dass sich das Speichenskelett 6 vom Lenkradkranzskelett 2 bis zu einer Lenkradnabe 10 erstreckt. Dabei ist das Speichenskelett 6 vom Lenkradkranz ausgehend zunächst vollständig von der Speichenummantelung 8 umgeben. Im mittleren Bereich des Lenkrades ist dagegen ein Hohlraum 11 vorhanden, der sich von der Lenkradnabe 10 bis zur oberen Ummantelung in Form der Abdeckung 12 im mittleren Abschnitt des Lenkrades erstreckt.

Aus dem rechts der Mittellinie liegenden Schnittabschnitt, der sich bis zur Mitte des Lenkrades erstreckt, ist ersichtlich, dass bei dieser Ausführungsform die Mitte des Hohlraums eine Öffnung 13 aufweist, die später mittels einer nicht dargestellten Plakette verschlossen wird.

Beim Aufprall eines Insassen auf dieses Lenkrad verformt sich die obere Abdeckung 12 im mittleren Bereich des Lenkrades. Dadurch wird die Luft im Hohlraum 11 komprimiert und trägt somit zur Energieabsorption bei.

## Patentansprüche

1. Energie absorbierendes Lenkrad, insbesondere großvolumiges Lenkrad für LKW, mit einem Lenkradskelett (2) mit Nabe (10), Speichen (4, 5) und Lenkradkranz (1), die mit einer Ummantelung (3, 8, 9, 12) versehen sind, wobei sich die Skelettabschnitte (6, 7) der Speichen (4, 5) vom Lenkradkranz (1) bis zur Nabe (10) erstrecken und der Bereich oberhalb der Nabe (10) energieabsorbierend ausgebildet ist und wobei die Ummantelung (3, 8, 9, 12) zumindest im Bereich oberhalb der Nabe (10) mindestens einen Hohlraum (11) zur Unterstützung der Energieabsorption aufweist
**dadurch gekennzeichnet,**
**dass** der Hohlraum (11) durch die Ummantelung (3, 8, 9, 12), einen Teil des Speichenskeletts (6) und die Nabe (10) begrenzt ist und dass die Energieabsorption nur durch die Ummantelung (3, 8, 9, 12) und die im Hohlraum (11) befindliche, komprimierbare Luft erzielt wird, ohne dass sich in dem Hohlraum (11) Einlagen befinden.

2. Lenkrad nach Anspruch 1, **dadurch gekennzeichnet, dass** sich der Hohlraum (11) von der Nabe (10) bis in den oberen, dem Insassen zugekehrten Bereich der Ummantelung.(12) erstreckt.

3. Lenkrad nach Anspruch 1 oder 2, **dadurch gekennzeichnet, dass** die Ummantelung (12) oberhalb des Hohlraumes (11) eine Dicke aufweist, die eine Verformung beim Aufprall des Insassen zulässt ohne dabei zu brechen..

4. Lenkrad nach mindestens einem der vorhergehenden Ansprüche, **dadurch gekennzeichnet, dass** eine Ummantelung (12) aus PUR-Schaum oberhalb des Hohlraumes (11) eine Dicke von.10 bis.20.mm aufweist.

5. Lenkrad nach mindestens einem der vorhergehenden Ansprüche, **dadurch gekennzeichnet, dass** sich der Hohlraum (11) seitlich bis in den Bereich der Speichen (4, 5) erstreckt.

6. Lenkrad nach mindestens einem der vorhergehenden Ansprüche, **dadurch gekennzeichnet, dass** der Hohlraum (11) im Bereich einer auf die Lenkradummantelung (12) aufgebrachten Plakette eine Öffnung (13) aufweist, die durch die Plakette verschlossen ist.

## Claims

1. Energy-absorbing steering wheel, in particular large-volume steering wheel for HGVs, with a steering-wheel skeleton (2) with hub (10), spokes (4, 5) and steering-wheel rim (1) which are provided with a casing (3, 8, 9, 12), the skeleton portions (6, 7) of the spokes (4, 5) extending from the steering-wheel rim (1) as far as the hub (10), and the region above the hub (10) being of energy-absorbing design, and the casing (3, 8, 9, 12) having, at least in the region above the hub (10), at least one cavity (11) for assisting the energy absorption, **characterized in that** the cavity (11) is delimited by the casing (3, 8, 9, 12), part of the spoke skeleton (6) and the hub (10), and **in that** energy absorption is achieved solely by means of the casing (3, 8, 9, 12) and the compressible air located in the cavity (11), without inserts being located in the cavity (11).

2. Steering wheel according to Claim 1, **characterized in that** the cavity (11) extends from the hub (10) into the upper region, facing the occupant, of the casing (12).

3. Steering wheel according to Claim 1 or 2,
**characterized in that** the casing (12) has, above the cavity (11), a thickness which allows deformation under the impact of the occupant, without at the same time breaking.

4. Steering wheel according to at least one of the preceding claims, **characterized in that** a casing (12) consisting of PUR foam has a thickness of 10 to 20 mm above the cavity (11).

5. Steering wheel according to at least one of the preceding claims, **characterized in that** the cavity (11) extends laterally into the region of the spokes (4, 5).

6. Steering wheel according to at least one of the preceding claims, **characterized in that** the cavity (11) has, in the region of a badge applied to the steering-wheel casing (12), an orifice (13) which is closed by means of the badge.

## Revendications

1. Volant absorbant l'énergie, en particulier volant de grand volume pour camions, comportant une ossature de volant (2) avec un moyeu (10), des rayons (4,5) et une couronne de volant (1), qui sont munis d'une enveloppe (3, 8, 9, 12), dans lequel les sections d'ossature (6,7) des rayons (4,5) s'étendent de la couronne de volant (1) au moyeu (10) et la zone au-dessus du moyeu (10) est configurée pour absorber de l'énergie et dans lequel l'enveloppe (3, 8, 9, 12) présente au moins un espace creux (11) au moins dans une zone au-dessus du moyeu (10) pour contribuer à l'absorption d'énergie,
**caractérisé en ce que**
l'espace creux (11) est délimité par l'enveloppe (3, 8, 9, 12), une partie de l'ossature des rayons (6) et le moyeu (10), et **en ce que** l'absorption d'énergie n'est obtenue que par l'enveloppe (3, 8, 9, 12) et l'air comprimable se trouvant dans l'espace creux (11) sans la présence de pièces rapportées dans l'espace creux (11).

2. Volant selon la revendication 1,
**caractérisé en ce que**
l'espace creux (11) allant du moyeu (10) jusqu'à la zone supérieure de l'enveloppe (12), zone qui est détournée des occupants.

3. Volant selon la revendication 1 ou la revendication 2,
**caractérisé en ce que**
l'enveloppe (12) au-dessus de l'espace creux (11) présente une épaisseur qui autorise une déformation lors d'une collision avec les occupants du véhicule sans pour autant se briser.

4. Volant selon au moins l'une des revendications précédentes,
**caractérisé en ce que**
une enveloppe (12) en mousse de polyuréthane au-dessus de l'espace creux (11) présente une épaisseur de 10 à 20 mm.

5. Volant selon au moins l'une des revendications précédentes,
**caractérisé en ce que**
l'espace creux (11) s'étend latéralement jusque dans la zone des rayons (4,5).

6. Volant selon au moins l'une des revendications précédentes,
**caractérisé en ce que**
l'espace creux (11) présente une ouverture (13) dans une zone d'une plaquette montée sur l'enveloppe de volant (12), ouverture qui est obturée par la plaquette.
